# EUROPÄISCHE PATENTSCHRIFT

(11) **EP 2 926 674 B1**
(45) Veröffentlichungstag und Bekanntmachung des Hinweises auf die Patenterteilung: **30.11.2016**
(21) Anmeldenummer: 15157746.7
(22) Anmeldetag: 05.03.2015
(51) Int. Cl.: A23B 5/00, A23B 5/02, A23L 15/00

(54) **Verfahren zur Herstellung eines Lebensmittels auf Basis von Eiklar**
METHOD FOR PRODUCING A FOOD PRODUCT BASED ON EGG WHITE
PROCÉDÉ DE FABRICATION D'UN ALIMENT À BASE DE BLANC D' UF

(30) Priorität: 02.04.2014 DE 102014206351
(43) Veröffentlichungstag der Anmeldung: 07.10.2015
(73) Patentinhaber: OVOBEST Eiprodukte GmbH & Co. KG, 49434 Neuenkirchen-Vörden (DE)
(72) Erfinder: Schneppe, Bernhard Dr., 49434 Neuenkirchen-Vörden (DE); Bosse, Gunnar, 49434 Neuenkirchen-Vörden (DE)
(74) Vertreter: Taruttis, Stefan Georg

(56) Entgegenhaltungen:
- DD-A5- 290 128
- US-A- 3 682 660
- LECHEVALIER ET AL: "Egg white drying: Influence of industrial processing steps on protein structure and functionalities", JOURNAL OF FOOD ENGINEERING, BARKING, ESSEX, GB, Bd. 83, Nr. 3, 13. Juli 2007 (2007-07-13), Seiten 404-413, XP022151782, ISSN: 0260-8774, DOI: 10.1016/J.JFOODENG.2007.03.033

## Beschreibung

Die Erfindung betrifft ein Verfahren zur Herstellung eines Lebensmittels auf Basis von Eiklar sowie das mit dem Verfahren hergestellte Lebensmittel. Das Verfahren zeichnet sich dadurch aus, dass das hergestellte Lebensmittel olfaktorisch, sensorisch und vom Mundgefühl her für den direkten Verzehr akzeptabel ist und insbesondere keinen Eigeschmack oder Eigeruch aufweist und in flüssiger Form nicht schleimig ist. Das Lebensmittel kann flüssig oder alternativ als schnelllösliches Pulver in trockener Form hergestellt werden, das durch Zusatz von Wasser zu einem verzehrfähigen flüssigen Lebensmittel rekonstituiert werden kann. Der Proteingehalt des Lebensmittels stammt vorzugsweise im Wesentlichen oder vollständig aus Eiklar, optional besteht der in dem Lebensmittel enthaltene Gehalt an Protein aus Protein aus Eiklar, insbesondere dadurch, dass dem Lebensmittel kein Protein, insbesondere kein Milchprotein oder pflanzliches Protein zugesetzt wird. Das Lebensmittel weist bevorzugt das Protein aus Eiklar, in wässriger bzw. flüssiger Ausführungsform Wasser, sowie zugesetzte Aromen, Farbstoffe, Konservierungsmittel und/oder Süßungsmittel auf oder besteht daraus. Bevorzugt stammen die Eier für das Eiklar von Hühnern. Das Lebensmittel ist bevorzugt in dem flüssigen Zustand, den es nach der Pasteurisierung aufweist, ggf. nach zusätzlicher Trocknung und Versetzen mit einer wässrigen Flüssigkeit, direkt verzehrfähig.

Das Verfahren und das damit hergestellte Lebensmittel zeichnen sich dadurch aus, dass ein Lebensmittel erhalten wird, dessen Proteingehalt aus Eiklar stammt, bevorzugt aus Eiklar-Proteinen besteht und ein angenehmes Mundgefühl hat und im Wesentlichen geschmacksneutral ist. Die in dem Lebensmittel enthaltenen Eiklar-Proteine weisen insbesondere im Wesentlichen, z.B. zu zumindest 95%, bevorzugter zumindest 98%, noch bevorzugter zumindest 99% der Bestandteile des Eiklarproteins auf oder bestehen daraus. Das mit dem Verfahren erhältliche Lebensmittel hat einen hohen Proteingehalt, das eine hohe biologische Verfügbarkeit aufweist. Das Erscheinungsbild des mit dem Verfahren erhältlichen Lebensmittels ist ohne Zusatz von Farbstoffen im flüssigen Zustand weiß und sämig, ähnlich einem Trinkjoghurt. In der bevorzugten Ausführungsform, in der der Proteingehalt des Lebensmittels vollständig aus Eiklar stammt, enthält das Lebensmittel kein Milcheiweiß und/oder keine Laktose.

Das Lebensmittel kann insbesondere durch Zusatz von Aromen, Farbstoffen, Süßungsmittel und/oder Säure mit einer Geschmacksrichtung versehen werden, wobei vorteilhafterweise kein Eigeruch oder Eigeschmack überdeckt werden muss.

### Stand der Technik

Die US 3,682,660 beschreibt ein Verfahren zur Pasteurisierung von Eiklar, dem zunächst 0,2-2% eines Alkali-Polyphosphats und Säure bis auf einen pH von 6,5-8,0 zugesetzt werden, mit anschließender Wärmebehandlung bei 54 - 63 °C. Das erhaltene Eiklar zeigte keine Koagulation und war klar. Die Aufschäumeigenschaften des so pasteurisierten Eiklars zeigte eine Stabilisierung der Eiklarproteine gegen Koagulation.

Die DD 290128 A5 beschreibt zur Herstellung von Eiklarpulver, das verbesserte Aufschlageigenschaften und eine bessere Gelierfähigkeit hat, das Aufkonzentrieren von Eiklar mittels Ultrafiltration zum Entziehen von ca. 50% Wasser bei 5 bis 40°C auf 20 bis 30 % Trockenmasse mit anschließender Sprühtrocknung.

Microorganisms in Food , 2. Aufl., Kluwer Academic/Plenum Publishers 2005, S. 618-623, nennt für die Pasteurisierung von Flüssigei ohne chemische Zusätze Pasteurisierungstemperaturen von 55,6 bis 69 °C, wobei niedrige Temperaturen eine höheres Risiko für lebensfähige Salmonellen ergeben und hohe Temperaturen und längere Behandlungszeiten die funktionellen Eigenschaften stärker beeinträchtigen, z.B. die Aufschlagfähigkeit. Ein Pasteurisierungsverfahren in Kombination mit einer Aufkonzentrierung wird nicht beschrieben.

Egg Science and Biotechnology, Hrsg. Mine, 2008, S. 307-325, beschreibt im Zusammenhang mit der Trocknung von Ei, insbesondere durch Sprühtrocknen bei 121 bis 232 °C, dass zur Verringerung der Kosten Wasser durch Ultrafiltration oder reverse Osmose abgetrennt werden kann, ohne dass die Aufschlageigenschaften beeinträchtigt werden. Die Gelfestigkeit von Eiklar wurde erhöht, was auf die erhöhte Proteinkonzentration zurückgeführt wird. Für Eiklar wird 51,7°C für 1,5 min zur Inaktivierung von natürlicher Katalase beschrieben, mit dem anschließenden Zusatz von H₂O₂ mit Halten bei 51,7°C für 2 min, anschließendem Kühlen auf 7°C und Zusetzen von Katalase zur Entfernung von H₂O₂. Diese Behandlung soll Listerien inaktivieren, ohne das hitzeempfindliche Eiklarprotein zu zerstören. Nach dem Trocknen wird getrocknetes Eiklar bei 54,4°C für 7 bis 10d inkubiert, um Salmonellen zu inaktivieren, wodurch auch die Aufschlageigenschaften und die Gelfestigkeit verbessert werden. Eine Aufkonzentrierung wird nicht im Zusammenhang mit der Pasteurisierung von flüssigem Eiklar beschrieben.

Die US 3251697 A beschreibt, dass durch den Zusatz von mehrwertigen Metallionen, insbesondere Salzen von Aluminium, Eisen, Kupfer, Nickel, Mangan, Kobalt, Zink oder Kadmium, die Pasteurisierung von Eiklar bei höheren Temperaturen zur Inaktivierung von Mid erfolgen kann, ohne dessen funktionale Eigenschaften zu beeinträchtigen, z.B. die Aufschlagfähigkeit oder Gelbildung.

Die EP 0083327 B1 beschreibt, verzehrfähige flüssige Lebensmittel durch Einmischen von Molkepulver in Wasser und Fruchtsaft herzustellen, wobei zur Proteinstabilisierung hydrolysierte Lactose zugesetzt wird.

### Aufgabe der Erfindung

Die Aufgabe der Erfindung liegt darin, ein Verfahren zur Herstellung eines Lebensmittels mit hohem Proteingehalt auf Basis von Eiklar bereitzustellen, wobei das Lebensmittel im flüssigen Zustand sensorisch, geschmacklich und vom Mundgefühl akzeptabel ist, sowie das mit dem Verfahren hergestellte Produkt.

### Beschreibung der Erfindung

Die Erfindung löst die Aufgabe mit den Merkmalen der Ansprüche, insbesondere durch ein Verfahren zur Herstellung eines Lebensmittels mit einem Gehalt an Protein durch Öffnen von Vogeleiern, die insbesondere Hühnereier sind, und Abtrennen des Eigelbs vom Eiklar, Einstellen des pH-Werts des Eiklars auf einen Wert zwischen 4 bis 7,5, z.B. auf pH 7,0 bis 7,5, insbesondere durch Säurezugabe, Abtrennen von Salz (NaCl) aus dem Eiklar bis auf einen Restgehalt Salz von maximal 0,4 Gew.-%, bevorzugt auf 0,3 bis 0,4 Gew.-%, besonders bevorzugt auf 0,3 bis 0,31 Gew.-% Salz, und Abtrennen von Wasser aus dem Eiklar bis auf einen Proteingehalt von 18 bis 23 Gew.-% mit anschließendem Pasteurisieren durch Erwärmen auf 53°C bis 60°C für 250 bis 450 s, unter Bewegung, insbesondere durch Durchströmen eines Wärmeübertragers. Das abgetrennte Eigelb wird dem Lebensmittel nicht zugesetzt und bildet keinen Bestandteil des Lebensmittels. Generell bevorzugt ist die Bewegung während der Pasteurisierung eine turbulente Strömung, die z.B. beim Durchströmen eines Wärmeübertragers durch die Strömungsgeschwindigkeit eingestellt wird.

Es hat sich gezeigt, dass aus dem Eiklar, das nach der Abtrennung des Eigelbs den typischen Eigeruch und Eigeschmack sowie ein klares, leicht grünliches Erscheinungsbild und ein schleimiges Mundgefühl hat, mit dem erfindungsgemäßen Verfahren ein weißes, sämiges flüssiges Lebensmittel herstellbar ist, das vor dem Zusatz von Zusatzstoffen im Wesentlichen geruchs- und geschmacksneutral ist und ein angenehmes Mundgefühl hat. Das in dem flüssigen Lebensmittel enthaltene Protein ist ohne einen Gehalt an Zusatzstoffen, insbesondere ohne einen Gehalt an Verdickungsmittel, gegen Sedimentation und gegen Agglomeration im Wesentlichen stabil. Diese Eigenschaften des hergestellten flüssigen Lebensmittels werden durch die Verfahrensschritte erreicht, insbesondere durch die Ansäuerung vom natürlichen pH von ca. 9,2 des Eiklars auf pH 4 bis 7,5, bevorzugt pH 4,5 bis 7,5, bevorzugter 7,0 bis 7,5, und Abtrennen von Salz bis auf einen Salzgehalt von max. 0,4 Gew.-% und Abtrennen von Wasser bis zum Erreichen einer Proteinkonzentration von mindestens 18 Gew.-%, bevorzugt von 18 bis 23 Gew.-%, z.B. von zumindest 20 Gew.-%, und der anschließenden Pasteurisierung durch Erwärmen auf 53°C bis 60°C für 250 bis 450 s, bevorzugt auf 55 bis 58 °C für 300 bis 400 s unter Bewegung. Diese Verfahrensschritte erlauben auch eine kontinuierliche Pasteurisierung mittels eines Wärmeübertragers, z.B. eines Rohrbündelwärmetauschers oder eines Plattenwärmetauschers, mit dem auch die Dauer der Erwärmung eingestellt werden kann. Optional wird das Lebensmittel nach dem Pasteurisieren gekühlt, bevorzugt auf max. 10 °C, bevorzugter auf max. 5 °C, optional direkt nach dem Pasteurisieren, z.B. mittels eines Wärmeübertragers.

Das weiße Erscheinungsbild des mit dem Verfahren aus Eiklar ohne Zusatzstoffe erhältlichen Lebensmittels deutet daraufhin, dass das Protein darin zumindest anteilig denaturiert ist und Partikel ohne zusammenhängende Struktur aufweist. Bei einem Salzgehalt von 0,4 Gew.-%, einem Proteingehalt von 20 Gew.-% wurden für das mit dem Verfahren hergestellte Lebensmittel folgende bevorzugte Parameter bestimmt: Viskosität im Bereich von 50 mPas bis 200 mPas (bei 20°C), eine Dichte des von der Flüssigkeit abgetrennten Proteinanteils von ca. 0,4 bis 0,6 kg/l und eine Dichte des von Feststoffen abgetrennten Flüssigkeitsanteils von ca. 0,98 bis 1,08 kg/l. Generell hat das Lebensmittel im flüssigen Zustand eine bei 20°C bestimmte Viskosität von 50 bis 300 mPas, bevorzugt 180 bis 270 oder bis 260 mPas, optional zusätzlich oder alternativ eine Viskosität von 100 bis140 mPas bei 59,5°C, wobei die Viskosität die dynamische Viskosität ist. Die Viskosität ist z.B. mittels eines Couetteviskosimeters mit einem Innenzylinder mit 39 mm Außendurchmesser und einem konzentrischen Becher mit 47 mm Innendurchmesser bestimmt, wobei der Innenzylinder mit einer Schersekunde von 100 /s drehen gelassen wurde.

Es hat sich gezeigt, dass die Viskosität des flüssigen Lebensmittels im Laufe der Lagerung, z.B. bei 20°C für 3 Monate im geschlossenen Behälter, mit einem Salzgehalt von 0,4 Gew.-% und einem Proteingehalt von 20 Gew.-% ohne Zusatzstoffe von 190 bis 210 mPas unmittelbar nach der Herstellung auf ca. 240 bis 260 mPas ansteigen kann, jeweils bei 20°C gemessen.

Für rohes Eiklar wurde unter den gleichen Messbedingungen eine dynamische Viskosität von 5 bis 7 mPas gefunden, für pasteurisiertes Eiklar, das keiner Aufkonzentrierung unterzogen wurde und daher den natürlichen Proteingehalt aufwies, von ca. 5 mPas, jeweils bei 20°C bestimmt.

Neben dem weißen Erscheinungsbild zeichnet sich das mit dem erfindungsgemäßen Verfahren hergestellte Lebensmittel daher durch eine wesentlich höhere Viskosität aus.

Es hat sich gezeigt, dass das erfindungsgemäß hergestellte Lebensmittel im Wesentlichen keine Aufschlagfähigkeit hat und eine nur sehr geringe Gelbildung.

Das Vorliegen des Eiklarproteins in Form weißer Partikel und die Viskosität des Lebensmittels werden auf die Kombination der Proteinkonzentration, die durch Abtrennen von Salz verringerte Ionenstärke, den eingestellten pH und die anschließende Behandlung unter Bewegung durch Pasteurisieren oder Hochdruck zurückgeführt.

Als Alternative zum Pasteurisieren durch Erwärmung kann das Pasteurisieren durch Hochdruckbehandlung erfolgen, z.B. durch Beaufschlagen des Eiklars mit zumindest 200 bar, z.B. bis 500 bar oder bis 400 bar. Das Pasteurisieren durch diese Hochdruckbehandlung erfolgt unter Bewegung des Eiklars, z.B. durch Rühren in einem Behälter oder Pumpen durch eine Leitung, vorzugsweise bei Temperaturen des Eiklars vor der Hochdruckbehandlung von unterhalb 25 °C, bevorzugter unterhalb 20 °C. Die Hochdruckbehandlung erfolgt bevorzugt für 2 min, für 60 s, für 45 s, bevorzugter für 30 s oder für 20 s. Bevorzugt wird das Eiklar vor der Hochdruckbehandlung auf max. 25 °C, bevorzugter max. 20 °C temperiert. Auch während dieser Hochdruckbehandlung ist die Bewegung bevorzugt eine turbulente Strömung.

In einer ersten Ausführungsform wird das Lebensmittel nach dem Pasteurisieren in für Lebensmittel geeignete Behältnisse abgefüllt, die z.B. Dosen, Kartons, Flaschen, Becher oder Fässer. Wegen des weißen und sämigen Erscheinungsbilds kann das Lebensmittel in Behältnissen abgefüllt sein, die optisch durchsichtig sind. Alternativ oder zusätzlich zum Kühlen unmittelbar nach dem Pasteurisieren können die Behältnisse nach dem Abfüllen des Lebensmittels in diese gekühlt werden.

Das Lebensmittel kann durch Zusetzen zumindest eines Zusatzstoffs mit einer Geschmacksrichtung versehen werden, der z.B. aus der Gruppe ausgewählt ist, die Aromen, Säuren, Konservierungsmittel, Farbstoffe und Süßungsmittel umfasst oder daraus besteht. Das Süßungsmittel kann insbesondere Saccharose, Glukose, Fruktose, ein Zuckeralkohol und natürlicher oder synthetischer Süßstoff, z.B. Aspartam, Acesulfam, Sucralose oder Steviaglykoside, und Mischungen dieser sein. Bevorzugt ist ein Gehalt an Zusatzstoffen von 4 bis 8 Gew.-% Saccharose oder ein für die entsprechende Süßkraft ausreichender Gehalt anderer Süßungsmittel. Für saure Lebensmittel, insbesondere Fruchtaromen, ist z.B. ein Zusatz zu 4 bis 6 Gew.-% Saccharose und für süße Lebensmittel 6 bis 8 Gew.-% Saccharose geeignet, insbesondere Vanille und/oder Schokolade bzw. Kakao. Zusatzstoffe werden bevorzugt nach dem Abtrennen von Salz und Wasser und vor dem Pasteurisieren zugesetzt.

Aromen können unter natürlichen und synthetischen Aromen ausgewählt sein, z.B. unter Fruchtaromen, Fruchtextrakten, Fruchtsaftkonzentraten oder Fruchtkonzentraten, Schokolade, Vanille, Kakao, Hefeextrakt und Kräuterextrakten.

Bevorzugt wird der pH-Wert durch Zugabe von Citronensäure und/oder Phosphorsäure, weniger bevorzugt Milchsäure, Essigsäure oder Salzsäure eingestellt. Das Konservierungsmittel kann Ascorbinsäure, Sorbinsäure, Benzoesäure und/oder ein Enzym bzw. enzymatischer Hilfsstoff sein.

Optional kann der pH-Wert des Eiklars vor dem Abtrennen von Salz und Wasser, insbesondere vor Abtrennen von Salz und Wasser mittels Ultrafiltration, in einem ersten Schritt auf pH 6,5 bis 7,5, bevorzugter auf pH 7,0 bis 7,5 eingestellt werden. Die Einstellung eines pH-Werts von 6,5 bis 7,5, bevorzugter auf pH 7,0 bis 7,5 vor der Ultrafiltration ergibt eine effektive Abtrennung von Salz und Wasser mittels Ultrafiltration bei geringem Verlust an Protein. Mit dem Abtrennen von Salz werden generell auch andere gelöste Mineralien abgetrennt. Die Einstellung des pH auf 4,0 bis 7,5, z.B. auf 4,5 bis 7,5, bevorzugter bis 7,0, z.B. pH 4,5 bis 6,5, bevorzugt mit Zusatz der Zusatzstoffe vor dem Pasteurisieren, ergibt ein weißes, ggf. durch die Zusatzstoffe gefärbtes flüssiges Lebensmittel von sämiger Konsistenz.

Nach der Abtrennung von Salz und Wasser kann optional der pH-Wert eingestellt werden bzw. weiter erniedrigt werden, z.B. auf pH 4,0 bis 7, vor oder nach dem Pasteurisieren. Ein pH-Wert von 4,5 bis 5,2 ist für fruchtig-saure Aromen bevorzugt, z.B. für Kirsch-, Himbeer- oder Erdbeeraroma, für Schokoladen- oder Vanillearoma ein pH-Wert von 6,5 bis 7.

Das Abtrennen von Salz und Wasser erfolgt bevorzugt durch Ultrafiltration, bei der das Protein aus Eiklar bevorzugt im Wesentlichen vollständig zurückgehalten wird. Bevorzugt erfolgt die Ultrafiltration mittels einer Membran, die eine Ausschlussgrenze im Bereich von 10 bis 200 kDa, bevorzugter von 10 bis 150 kDa aufweist, z.B. mit einem über die Membran anliegenden Druckgefälle von 2 bis 8 bar. Die Ultrafiltration hat den Vorteil, dass nur ein sehr geringer Anteil des Proteins des Eiklars als Verlust durch die Membran tritt.

Das Abtrennen von Salz und Wasser, bevorzugt durch Ultrafiltration, kann bei einer Temperatur von 20 bis 40 °C erfolgen, bevorzugter bei 25 bis 35 °C.

Das Eiklar kann, bevorzugt nach Einstellen des pH-Werts, z.B. durch Zugabe von Säure, ohne Zusetzen von weiteren Zusatzstoffen zur Abtrennung von Salz und Wasser eingesetzt werden. In dieser Ausführungsform wird nur Eiklar zur Abtrennung von Salz und Wasser eingesetzt. Alternativ kann dem Eiklar vor der Abtrennung von Salz und Wasser zusätzliches Wasser, insbesondere Leitungswasser, entionisiertes Wasser oder reines Wasser zugesetzt werden, z.B. nach einer ersten Stufe der Ultrafiltration zur teilweisen Abtrennung von Salz und Wasser mit einer an die Wasserzugabe anschließenden zweiten Stufe der Ultrafiltration zur weiteren Abtrennung von Salz und Wasser. Bevorzugt erfolgt die Ultrafiltration mehrstufig, jeweils mit Zusatz von Wasser und einer anschließenden weiteren Stufe der Ultrafiltration, um den Salzgehalt genau einzustellen, da dieser sich wesentlich auf die Geschmacksbildung auswirkt.

Die Zusatzstoffe werden optional vor dem Pasteurisieren zugesetzt, weiter bevorzugt nach dem Abtrennen von Salz und Wasser und vor dem Pasteurisieren. Auf diese Weise wird die Haltbarkeit durch die Pasteurisation der Zusatzstoffe verbessert.

Das Lebensmittel hat den Vorteil, nach dem Pasteurisieren gegen Agglomeration und Sedimentation im Wesentlichen stabil zu sein, z.B. für eine Lagerdauer von zumindest 1 oder 2 Wochen, so dass es bevorzugt keinen Suspensionsstabilisator enthält, insbesondere kein Xanthan, Johannisbrotkernmehl, Guargummi, Agar-Agar, Carrageen, Gelatine, Pektin, Stärke oder modifizierte Stärke.

In einer zweiten Ausführungsform wird das Lebensmittel nach dem Pasteurisieren getrocknet. In dieser Ausführungsform ist eine Abtrennung von Salz vor dem Pasteurisieren bis auf einen Gehalt an Salz von max. 0,25 Gew.-% bevorzugt, bevorzugter max. 0,04 Gew.-%, um einen effektiven Salzgehalt des getrockneten Proteins aus Eiklar von 0,9 Gew.-% bei einem Restwassergehalt von 3 bis 5 Gew.-% zu unterschreiten. Das Trocknen erfolgt bevorzugt bis zur Erzeugung eines Granulats, bevorzugt bis zu einer Korngröße von max. 0,08 mm, bevorzugter max. 0,05 mm, z.B. durch Sprühgranulation, Sprühtrocknen, Gefriertrocknen, Walzentrocknen oder Fließbetttrocknen. Optional, insbesondere wenn das so erhaltene getrocknete Lebensmittel nicht in Granulatform ist, kann es anschließend an das Trocknen granuliert werden, z.B. mittels eines Fließbetttrockners, Pflugschartrockners etc. Während des Granulierens kann der Feuchtegehalt auf den Restwassergehalt von max. 5 Gew.-%, z.B. von 3 bis 5 Gew.-%, eingestellt werden. Optional kann dem Lebensmittel vor dem Granulieren ein Granulierhilfsmittel zugesetzt werden, z.B. Lezithin, insbesondere Sojalezithin, Trikalziumphosphat, Stärke, Silikat und/oder Cellulose. Optional ist das Lebensmittel in dieser Ausführungsform frei von Granulierhilfsmitteln, insbesondere frei von Stärke und/oder Cellulose und damit frei von zugesetzten Allergenen wie z.B. Gluten aus Stärke.

In dieser Ausführungsform weist das mit dem Verfahren hergestellte Lebensmittel eine gute Rehydratisierbarkeit bzw. Suspendierbarkeit in Wasser auf, bevorzugt ist es bei Raumtemperatur in Wasser durch einfaches Einrühren bzw. ohne motorbetriebenen Mischer wie eine Küchenmaschine klumpenfrei suspendierbar. Nach dem Suspendieren in Wasser hat das Lebensmittel im Wesentlichen dieselbe weiße Farbe, ggf. gefärbt durch zugesetzte Zusatzstoffe, und bei gleichem Proteingehalt im Wesentlichen dieselbe sämige Konsistenz wie vor dem Trocknen.

Alternativ kann das Eiklar nach Abtrennen von Salz, Abtrennen von Wasser, Einstellen des pH-Werts, insbesondere durch Zusetzen von Säure oder durch Fermentieren und/oder Entzuckern, ohne Zusetzen weiterer Zusatzstoffe pasteurisiert werden und erst nach anschließender Trocknung mit Zusatzstoffen versetzt werden, wobei die Zusatzstoffe vorzugsweise in trockener Form zugesetzt werden oder vor oder während der Trocknung zugesetzt werden.

Das Verfahren, insbesondere das Abtrennen von Salz, Abtrennen von Wasser, Einstellen des pH-Werts und anschließendes Pasteurisieren kann satzweise durchgeführt werden, z.B. für Satzgrößen von bis zu 10 t. Alternativ kann das Verfahren kontinuierlich durchgeführt werden, jeweils optional mit Zwischenlagern zwischen Abtrennen von Salz, Abtrennen von Wasser, insbesondere zwischen einzelnen Stufen einer Ultrafiltration mit Zugabe von Wasser zwischen den Stufen, und vor dem Einstellen des pH-Werts und/oder vor dem Pasteurisieren.

Optional kann das Eiklar entzuckert werden, z.B. vor, während oder nach dem Abtrennen von Salz und Wasser, bevorzugt vor dem Pasteurisieren, z.B. während des Abtrennens von Salz und Wasser mittels Ultrafiltration. Die Entzuckerung kann durch Zugabe von Glucoseoxidase und Sauerstoff und/oder Ozon erfolgen, oder durch Zugabe von Milchsäurebakterien, z.B.

Lactobacillus plantarum und/oder Lactobacillus cremoris und/oder Hefe, z.B. Saccharomyces cerevisiae, und Fermentieren, z.B. bei 30 bis 35 °C, bevorzugt bis keine Glukose im Eiklar enthalten ist. Die Entzuckerung erhöht die Haltbarkeit des Lebensmittels.

Erfindungsgemäß werden dem Eiklar bevorzugt kein Phosphat oder Polyphosphat zugesetzt und/oder keine Salze mehrwertiger Metallionen zugesetzt, insbesondere keine Salze von Aluminium, Eisen, Kupfer, Nickel, Mangan, Kobalt, Zink oder Kadmium.

Die Erfindung wird nun genauer an Hand von Beispielen erläutert.

### Beispiel 1: Herstellung des Lebensmittels, dessen Protein aus Eiklarprotein besteht

Von ca. 10 t Eiklar (pH ca. 9,3, Trockensubstanz ca. 11 %, Gehalt an NaCl ca. 0,45 Gew.-%), das durch Öffnen von Hühnereiern und Abtrennen des Eigelbs hergestellt wurde, wurde nach Einstellen des pH-Werts auf 7,0 durch Zusatz von Zitronen- oder Phosphorsäure mittels Ultrafiltration über eine Membran bei gleichbleibendem Überströmungsprofil zwischen 1800 bis 2200 l/h und einem Transmembrandruck von ca. 7 bis 16 bar bei 25 °C Salz und Wasser abgetrennt. Die eingesetzten Membranen hatten eine Gesamtfläche von 576 m².

Unter diesen Bedingungen ergab sich bei einer Ausschlußgrenze der Membran von 150 kDa ein mit der Zeit abnehmender Permeatstrom von 1300 l/h mit einem Proteinverlust von ca. 0,5 %. Bei einer Membran mit einer Ausschlußgrenze von 20 kDa oder 10 kDa ergab sich ein Permeatstrom von ca. 1200 l/h, der bei der Membran mit einer Ausschlußgrenze von 10 kDa schneller abfiel als bei der Ausschlußgrenze von 20 kDa. Für die 10 kDa-Membran führte eine Steigerung des Transmembrandrucks auf 4 bar zu einer Steigerung des Permeatstroms auf ca. 1300 bis 1400 l/h. Für die Membran mit einer Ausschlußgrenze von 20 kDa konnte der Transmembrandruck auf 6 bar erhöht werden und führte zu einem Permeatstrom von ca. 1500 l/h, der bis zu einem Proteingehalt von 18 Gew.-% stabil blieb und bei ≥ 20 Gew.-% Protein auf ca. 800 l/h abfiel.

Die kontinuierliche Zugabe von entsalztem Wasser zum Eiklar während der Ultrafiltration führte zum logarithmischen Auswaschen von Salz, verhindert jedoch ein effektives Abtrennen von Wasser, so dass der Proteingehalt konstant blieb. Eine stufenweise Ultrafiltration mit Zugabe von Wasser zwischen einzelnen Stufen ermöglicht eine schnellere Abtrennung des Salzes, jedoch mit stärkerer Beanspruchung des Proteins, die sich z.B. in einer Trübung des Eiklars zeigt.

Nach dem Abtrennen von Salz auf einen Salzgehalt von 0,3 Gew.-% und Abtrennen von Wasser bis zu einem Gehalt an Eiklarprotein von ≥ 20 Gew.-% wurde bei 55 bis 58 °C mittels Durchströmung eines Wärmeübertragers für 300 bis 400 s pasteurisiert. Der Wärmeübertrager war ein Plattenwärmetauscher, der sich während der Pasteurisierung nicht zusetzte. Das nach der Pasteurisierung erhaltene Lebensmittel hatte eine weiße Farbe und war von sämiger, viskoser bzw. cremig milchiger Konsistenz, ca. 120 mPas bei 59,5 °C. Die Zugabe von Saccharose erhöhte die Viskosität und rundete das Mundgefühl ab.

Nach dem Pasteurisieren wurde der pH-Wert durch Zugabe von Citronensäure auf 4 bis 5 eingestellt. Dieses Lebensmittel, dem außer der Säure zur Einstellung des pH-Werts keine Zusatzstoffe zugefügt waren, erinnerte an Trinkjoghurt, war olfaktorisch schwach säuerlich, neutral, ohne Stallgeruch oder Eigeruch und gustatorisch mittelstark sauer, schwach adstringierend und hatte keinen Eigeschmack und kein Fehlaroma.

Der Salzgehalt wurde durch Mischen von ca. 3 g Eiklarprobe mit destilliertem Wasser auf 100 ml verdünnt, mit 5 ml 0,25 M Kaliumdichromatlösung in Wasser versetzt und mit 0,1 M wässriger Silbernitratlösung bis zum hellrosa Umschlagpunkt titriert und mit der Formel (Vol. Silbernitratlösung [ml]) x 0,58443 / Probemasse [g] = Salzgehalt [Gew.-%] bestimmt.

Der Proteingehalt wurde mit der Analyse nach Bradford bestimmt.

Der Zusatz von Xanthan oder Johannisbrotkernmehl als Verdickungsmittel an Stelle der Pasteurisierung oder anschließend an die Pasteurisierung führte zu einem sandigen oder schleimigen Mundgefühl, das unerwünscht ist. Entsprechend wird erfindungsgemäß generell bevorzugt kein Verdickungsmittel zugesetzt.

### Beispiel 2: Herstellung des Lebensmittels mit Fruchtaroma

Beispiel 1 wurde wiederholt, wobei jedoch nach der Ultrafiltration bis auf einen Salzgehalt von 0.3 Gew.-% und einen Proteingehalt von ≥ 20 Gew.-% der pH-Wert durch Zugabe von Phosphorsäure, bevorzugt Zitronensäure auf 4,5 eingestellt wurde und 20 mg/kg Sucralose, natürliches Zitrusaroma, Cumin als Farbstoff und 150 mg/kg Benzoat (Konservierungsmittel) zugemischt und anschließend bei 56 bis 58 °C in einem durchströmten Wärmeübertrager pasteurisiert wurde. Das erhaltene Lebensmittel wurde aseptisch in lebensmittelgeeignete laminierte Kartons (Tetrapak) abgefühlt. Dieses Lebensmittel war verzehrfähig, wies einen durch das zugesetzte Aroma und die Sucralose bestimmten Geschmack bzw. Aroma auf und war bei 5 °C für mindestens 12 Wochen lagerstabil.

### Beispiel 3: Herstellung des Lebensmittels in trockener Ausführungsform mit Aroma

Beispiel 1 wurde wiederholt, wobei vor dem Pasteurisieren der pH-Wert durch Zugabe von Zitronensäure auf 7 eingestellt wurde. Nach dem Pasteurisieren bei 58 bis 60 °C mittels Durchströmung eines Wärmeübertragers für 300 bis 400 s wurde das Lebensmittel durch Sprühtrocknung getrocknet und anschließend mit einem Wirbelschichttrockner agglomeriert. Optional wurde vor dem Agglomerieren 1 Gew.-% Sojalezithin und 0,10 % Trikalziumphosphat zugemischt. Das agglomerierte Lebensmittel hatte einen Restwassergehalt von max. 5 Gew.-% und eine Korngröße von max. 0,05 mm. Das Lebensmittel wurde anschließend mit 600mg Sucralose, Vanillearoma und Cumin als Farbstoff gemischt und in Aluminiumbeuteln zu je 750 g abgefüllt.

In Alternative zur Zumischung der Zusatzstoffe zu dem getrockneten und agglomerierten Lebensmittel konnten die Zusatzstoffe nach der Ultrafiltration und vor der Pasteurisation zugemischt werden. Da durch die Pasteurisation Aromaverluste und/oder Fehlaromen verursacht werden können, können Aromen auch nach der Pasteurisation zugesetzt werden.

Dieses Lebensmittel konnte durch Mischen mit Wasser bei Raumtemperatur mit Rühren per Löffel klumpenfrei resuspendiert werden.

### Beispiel 4: Herstellung des Lebensmittels in trockener Ausführungsform mit Fruchtaroma

Beispiel 1 wurde wiederholt, wobei vor dem Pasteurisieren der pH-Wert durch Zugabe von Phosphorsäure auf 5 eingestellt wurde. Nach dem Pasteurisieren bei 56 bis 58 °C mittels Durchströmung eines Wärmeübertragers für 300 bis 400 s wurde das Lebensmittel durch Sprühtrocknung getrocknet und anschließend mit einem Wirbelschichttrockner agglomeriert. Optional wurde vor dem Agglomerieren 1 Gew.-% Sojalezithin und 0,10 % Trikalziumphosphat, bevorzugt feinverteiltes Siliziumdioxid zugemischt. Das agglomerierte Lebensmittel hatte einen Restwassergehalt von max. 5 Gew.-% und eine Korngröße von max. 0,05 mm. Das Lebensmittel wurde anschließend mit 600mg Sucralose, natürliches Zitrusaroma und Cumin als Farbstoff als Zusatzstoffe gemischt und in Aluminiumbeuteln zu je 750 g abgefüllt.

In Alternative zur Zumischung der Zusatzstoffe zu dem getrockneten und agglomerierten Lebensmittel konnten die Zusatzstoffe nach der Ultrafiltration und vor der Pasteurisation zugemischt werden.

Dieses Lebensmittel konnte durch Mischen mit Wasser bei Raumtemperatur mit Rühren per Löffel klumpenfrei resuspendiert werden.

### Beispiel 5: Herstellung des Lebensmittels mit Entzuckerung des Eiklars

Beispiel 1 wurde wiederholt, wobei jedoch dem Eiklar während der Ultrafiltration Glukoseoxidase zu ca. 750 bis 1500 U/l zugesetzt wurde und gasförmiger reiner Sauerstoff oder Luft eingeblasen wurde. Alternativ wurden die Milchsäurebakterien Lactobacillus plantarum zugesetzt. Die Dauer der Ultrafiltration reichte aus, um den Glukosegehalt im Wesentlichen bis auf Null zu verringern. Das erhaltene Lebensmittel hatte nach der Pasteurisation ohne Zusatz von Zusatzstoffen das Erscheinungsbild wie das nach Beispiel 1 hergestellte, jedoch ohne Gehalt an Glukose.

### Beispiel 6: Herstellung des Lebensmittels mit Pasteurisierung durch Hochdruckbehandlung

Beispiel 1 wurde wiederholt, wobei jedoch die Pasteurisierung anstelle der Wärmebehandlung durch Hochdruckbehandlung bei 200 bar für ca. 1,5 min erfolgte. Dazu wurde das Eiklar nach der Ultrafiltration durch Zusatz von Citronensäure auf einen pH-Wert von 5 bis 7 gebracht und satzweise unter Rühren mit Hochdruck beaufschlagt.

Das erhaltene Lebensmittel war wiederum weiß und sämig, etwa wie das in Beispiel 1 erhaltene Lebensmittel.

## Patentansprüche

1. Verfahren zur Herstellung eines Lebensmittels mit einem Gehalt an Protein durch Öffnen von Vogeleiern und Abtrennen des Eigelbs vom Eiklar, **gekennzeichnet durch** Einstellen des pH-Werts des Eiklars auf einen Wert zwischen 4 bis 7,5,
Abtrennen von Salz aus dem Eiklar bis auf einen Restgehalt Salz von maximal 0,4 Gew.-% und
Abtrennen von Wasser aus dem Eiklar bis auf einen Proteingehalt von mindestens 18 Gew.-%,
mit anschließendem Pasteurisieren **durch** Erwärmen auf 53 bis 60°C für 250 bis 450 s unter Bewegung oder **durch** Hochdruckbehandlung von zumindest 200 bar unter Bewegung, wodurch das Lebensmittel im flüssigen Zustand weiß ist und eine bei 20°C bestimmte Viskosität von 50 bis 300 mPas aufweist.

2. Verfahren nach Anspruch 1, **dadurch gekennzeichnet, dass** das Abtrennen von Salz und das Abtrennen von Wasser gleichzeitig durch Ultrafiltration mit einer Membran mit einer Ausschlussgröße von 10 kDa bis 150 kDa erfolgt.

3. Verfahren nach einem der voranstehenden Ansprüche, **dadurch gekennzeichnet, dass** das Abtrennen von Salz und das Abtrennen von Wasser gleichzeitig durch zumindest zwei Stufen von Ultrafiltration erfolgt, wobei dem Eiklar zumindest nach einer ersten Stufe Wasser zugesetzt wird und zumindest eine zweite Stufe der Ultrafiltration erfolgt.

4. Verfahren nach einem der voranstehenden Ansprüche, **dadurch gekennzeichnet, dass** vor dem Pasteurisieren der pH auf einen Wert von 7,0 bis 7, 5 eingestellt wird und nach dem Pasteurisieren der pH auf einen Wert von 4,0 bis 6,5 eingestellt wird.

5. Verfahren nach einem der voranstehenden Ansprüche, **dadurch gekennzeichnet, dass** das Pasteurisieren durch Erwärmen mittels Durchströmen eines Wärmeübertragers erfolgt.

6. Verfahren nach einem der voranstehenden Ansprüche, **dadurch gekennzeichnet, dass** das Erwärmen auf 55 bis 58°C für 300 bis 400 s erfolgt.

7. Verfahren nach einem der Ansprüche 1 bis 4, **dadurch gekennzeichnet, dass** das Pasteurisieren durch Hochdruckbehandlung für maximal 2 min erfolgt und das Eiklar, von dem Wasser und Salz teilweise abgetrennt ist,während der Hochdruckbehandlung bewegt wird.

8. Verfahren nach einem der voranstehenden Ansprüche, **dadurch gekennzeichnet, dass** das Eiklar vor dem Pasteurisieren entzuckert wird.

9. Verfahren nach einem der voranstehenden Ansprüche, **dadurch gekennzeichnet, dass** dem Eiklar vor dem Pasteurisieren zumindest ein Zusatzstoff aus der Gruppe zugesetzt wird, die aus Aromen, Säuren, Konservierungsmittel, Farbstoff und Süßungsmitteln besteht.

10. Verfahren nach einem der Ansprüche 1 bis 8, **dadurch gekennzeichnet, dass** vor dem Pasteurisieren der pH des Eiklars auf einen Wert von maximal 7,5 eingestellt wird und dem Eiklar kein Zusatzstoff aus der Gruppe zugesetzt wird, die aus Aromen, Konservierungsmittel, Farbstoff und Süßungsmittel besteht und nur nach dem Pasteurisieren zumindest ein Zusatzstoff aus der Gruppe zugesetzt wird, die aus Aromen, Konservierungsmittel, Farbstoff und Süßungsmittel besteht.

11. Verfahren nach einem der voranstehenden Ansprüche, **dadurch gekennzeichnet, dass** das flüssige Lebensmittel unmittelbar nach dem Pasteurisieren oder nach dem Abfüllen in Behältnisse auf maximal 10 °C gekühlt wird.

12. Verfahren nach einem der voranstehenden Ansprüche, **dadurch gekennzeichnet, dass** der Gehalt an Protein des Lebensmittels aus Protein aus Eiklar besteht.

13. Verfahren nach einem der voranstehenden Ansprüche, **dadurch gekennzeichnet, dass** das Abtrennen von Salz bis auf einen Salzgehalt von maximal 0,25 Gew.-% erfolgt und nach dem Pasteurisieren bis auf einen Restwassergehalt von maximal 5 Gew.-% getrocknet und bis auf eine Partikelgröße von maximal 0,08 mm granuliert wird, wobei Zusatzstoffe aus der Gruppe, die aus Aromen, Konservierungsmittel, Farbstoff und Süßungsmittel besteht, nicht zugesetzt werden oder vor oder nach dem Trocknen zugesetzt werden.

14. Lebensmittel, erhältlich durch ein Verfahren nach einem der voranstehenden Ansprüche, **gekennzeichnet durch** eine im wässrigen Zustand mit einem Proteingehalt von 20 Gew.-% viskose Konsistenz mit einer Viskosität von 50 bis 300 mPas bei 20°C und/oder mit einer Viskosität von 100 bis 140 mPas bei 59,5 °C, wobei das Lebensmittel im flüssigen Zustand weiß ist oder nur **durch** Zusatzstoffe gefärbt ist und kein Verdickungsmittel enthält.

15. Lebensmittel nach Anspruch 14, **dadurch gekennzeichnet, dass** es bis auf einen Restwassergehalt von maximal 5 Gew.-% getrocknet und bis auf eine Partikelgröße von maximal 0,08 mm granuliert ist.

## Claims

1. Process for producing a food having a content of protein by opening of avian eggs and
separating the egg yolk from the white of egg, **characterized by** adjusting the pH value of the white of egg to a value between 4 to 7.5,
separating of salt from the white of egg up to a residual salt content of at maximum 0.4 % by weight and
separating water from the white of egg up to a protein content of at least 18 % by weight, with subsequent pasteurizing by warming to 53 to 60°C for 250 to 450 s under agitation or by high pressure treatment of at least 200 bar under agitation, whereby the fluid in its liquid state is white and has a viscosity determined at 20 °C of 50 to 300 mPas.

2. Process according to claim 1, **characterized in that** the separation of salt and the separation of water occurs simultaneously by ultrafiltration using a membrane having an exclusion size of 10 kDa to 150 kDa.

3. Process according to one of the preceding claims, **characterized in that** the separation of salt and the separation of water occurs simultaneously by at least two steps of ultrafiltration, wherein after the first step, water is added to the white of egg and at least a second ultrafiltration step follows.

4. Process according to one of the preceding claims, **characterized in that** prior to pasteurizing the pH is adjusted to a value of 7.0 to 7.5 and after pasteurizing the pH is adjusted to a value of 4.0 to 6.5.

5. Process according to one of the preceding claims, **characterized in that** pasteurizing occurs by warming by means of flow through a heat exchanger.

6. Process according to one of the preceding claims, **characterized in that** the heating occurs to 55 to 58°C for 300 to 400 s.

7. Process according to one of claims 1 to 4, **characterized in that** pasteurizing by high pressure treatment occurs for at maximum 2 min and the white of egg, from which water and salt are partially separated, is agitated during the high pressure treatment.

8. Process according to one of the preceding claims, **characterized in that** the white of egg is desugared prior to pasteurizing.

9. Process according to one of the preceding claims, **characterized in that** at least one additive selected from the group consisting of flavours, acids, preservative, colouring and sweeting agent is added to the white of egg prior to pasteurizing.

10. Process according to one of claims 1 to 8, **characterized in that** prior to pasteurizing the pH of the white of egg is adjusted to a value of at maximum 7.5 and no additive selected from the group consisting of flavours, preservative, colouring and sweeting agent is added to the white of egg, and only after the pasteurizing at least one additive is added from the group consisting of flavours, preservative, colouring and sweeting agent.

11. Process according to one of the preceding claims, **characterized in that** the liquid food directly prior to pasteurizing or after filling into containers is cooled to at maximum 10°C.

12. Process according to one of the preceding claims, **characterized in that** the content of protein of the food of protein consists of white of egg.

13. Process according to one of the preceding claims, **characterized in that** the separation of salt occurs to a salt content of at maximum 0.25 % by weight and after the pasteurizing is dried to a residual water content of at maximum 5 % by weight and is granulated to a particle size of a maximum 0.08 mm, wherein additives from the group consisting of flavours, preservatives, colouring and sweeting agent are not added or are added prior to or after the drying.

14. Food, obtainable by a process according to one of the preceding claims, **characterized by** a viscous consistency having a viscosity of 50-300 mPas at 20°C and/or having a viscosity of 100-140 mPas at 59.5°C in the aqueous state having a protein content of 20 % by weight, wherein the food in the liquid state is white or is coloured only by additives and does not contain a thickening agent.

15. Food according to claim 14, characterized that it is dried up to a residual water content of at maximum 5 % by weight and is granulated to a particle size of a maximum 0.08 mm.

## Revendications

1. Procédé de préparation d'un produit alimentaire ayant une teneur en protéine, consistant à ouvrir des oeufs d'oiseaux et à séparer le jaune d'oeuf du blanc d'oeuf, **caractérisé par** l'ajustement de la valeur du pH du blanc d'oeuf à une valeur comprise entre 4 et 7,5, la séparation du sel par rapport au blanc d'oeuf pour obtenir une teneur résiduelle de sel d'au maximum 0,4% en poids et la séparation de l'eau du blanc d'oeuf pour obtenir une teneur en protéine d'au moins 18 % en poids, suivie par la pasteurisation par chauffage à 53-60°C pendant 250 à 450s par remuage ou par traitement à haute pression d'au moins 200 bars en continuant le remuage, de sorte que le produit alimentaire est blanc à l'état liquide et présente à 20°C une viscosité spécifique de 50 à 300 mPas.

2. Procédé selon la revendication 1, **caractérisé en ce que** la séparation du sel et la séparation de l'eau sont effectuées simultanément par ultrafiltration avec une membrane ayant une taille d'exclusion de 10 kDa à 150 kDa.

3. Procédé selon l'une quelconque des revendications précédentes, **caractérisé en ce que** la séparation du sel et la séparation de l'eau sont effectuées simultanément par au moins deux étapes d'ultrafiltration, où l'on ajoute de l'eau au blanc d'oeuf au moins après une première étape et qu'au moins une deuxième étape d'ultrafiltration est réalisée.

4. Procédé selon l'une quelconque des revendications précédentes, **caractérisé en ce qu'**avant la pasteurisation on règle le pH à une valeur de 7,0 à 7, 5, et qu'après la pasteurisation on règle le pH à une valeur de 4,0 à 6,5.

5. Procédé selon l'une quelconque des revendications précédentes, **caractérisé en ce que** la pasteurisation est réalisée par chauffage par passage dans un échangeur de chaleur.

6. Procédé selon l'une quelconque des revendications précédentes, **caractérisé en ce qu'**un chauffage à 55-58°C est réalisé pendant 300 à 400 s.

7. Procédé selon l'une quelconque des revendications 1 à 4, **caractérisé en ce que** la pasteurisation est réalisée par traitement à haute pression pendant 2 minutes au maximum et le blanc d'oeuf est partiellement séparé de l'eau et du sel, pendant le traitement sous haute pression.

8. Procédé selon l'une quelconque des revendications précédentes, **caractérisé en ce que** le blanc d'oeuf est désucré avant la pasteurisation.

9. Procédé selon l'une des revendications précédentes, **caractérisé en ce que** l'on ajoute au blanc d'oeuf avant la pasteurisation au moins un additif du groupe comprenant des arômes, des acides, des conservateurs, des colorants et des édulcorants.

10. Procédé selon l'une quelconque des revendications 1 à 8, **caractérisé en ce qu'**avant la pasteurisation, on règle le pH du blanc d'oeuf à une valeur maximale de 7,5, que l'on n'ajoute aucun additif au blanc d'oeuf choisi dans le groupe constitué par les parfums, les conservateurs, les colorants et des édulcorants et que seulement après la pasteurisation on ajoute au moins un additif choisi dans le groupe comprenant des arômes, des conservateurs, des colorants et des édulcorants.

11. Procédé selon l'une quelconque des revendications précédentes, **caractérisé en ce que** le produit alimentaire liquide est refroidi immédiatement après la pasteurisation ou après le remplissage dans des récipients jusqu'à un maximum de 10°C.

12. Procédé selon l'une quelconque des revendications précédentes, **caractérisé en ce que** la teneur en protéines du produit alimentaire est constitué de protéines du blanc d'oeuf.

13. Procédé selon l'une quelconque des revendications précédentes, **caractérisé en ce que** la séparation du sel permet d'obtenir une teneur en sel maximale de 0,25% en poids et que la pasteurisation est suivie d'un séchage pour obtenir une teneur en eau résiduelle maximale 5% en poids et d'une granulation pour obtenir une taille de particule maximale de 0,08 mm, où les additifs choisis dans le groupe constitué par des arômes, des conservateurs, des colorants et des agents édulcorants ne sont pas ajoutés, ou sont ajoutés avant ou après le séchage.

14. Produit alimentaire pouvant être obtenu par un procédé selon l'une des revendications précédentes, **caractérisé par** une consistance visqueuse ayant une viscosité de 50 à 300 mPas à 20°C et/ou ayant une viscosité de 100 à 140 mPa.s à 59,5°C, à l'état aqueux ayant une teneur en protéine de 20% en poids, où le produit alimentaire est blanc à l'état liquide est blanc ou bien est coloré par des additifs et ne contient pas d'épaississant.

15. Produit alimentaire selon la revendication 14, **caractérisé en ce qu'**il est séché pour obtenir une teneur en eau résiduelle d'au maximum 5% en poids et granulé pour obtenir une taille de particule d'au plus 0,08 mm.
